# EUROPEAN PATENT SPECIFICATION

(11) **EP 1 095 756 B1**
(45) Date of publication and mention of the grant of the patent: **05.06.2002**
(21) Application number: 01100386.0
(22) Date of filing: 06.10.1997
(51) Int. Cl.: B29C 49/42, B29C 49/06, B29C 49/64, B29C 45/04

(54) **Injection stretch blow molding apparatus**
Vorrichtung zum Spritzstreckblasfromen
Appareil de moulage par injection-etirage-soufflage

(30) Priority: 09.10.1996 JP 28740396
(43) Date of publication of application: 02.05.2001
(62) Divisional of application: 97117279.6
(73) Proprietor: NISSEI ASB MACHINE CO., LTD., Nagano-ken (JP)
(72) Inventor: Ogihara, Shuichi, Komoro-shi, Nagano-ken (JP); Fukunishi, Yoshihiro, Komoro-shi, Nagano-ken (JP)
(74) Representative: Wunderlich, Rainer, Dipl.-Ing.

(56) References cited:
- EP-A- 0 158 146
- EP-A- 0 479 139
- EP-A- 0 732 187
- US-A- 4 280 805

## Description

### Background of the Invention

### Field of Industrial Application

The present invention relates to an injection stretch blow molding apparatus according to the preamble of claim 1.

### Prior Art

One of the injection stretch blow molding apparatuses is described in Japanese Patent Application Laid-Open No. 8-132517 which has been filed by the applicant.

Such an injection stretch blow molding apparatus comprises an injection molding station for injection-molding preforms, a blow molding station for stretch-blow-molding the injection molded preforms and a transfer station for transferring the preforms from the injection molding station to the blow molding station.

The injection molding station injection-molds a plurality of preforms at the same time and carries the injection-molded preforms to a preform removing section through a rotary disc while the preforms are being held by neck cavity molds and injection core molds. At the preform removing section, the preforms will be removed out of the injection molding station.

The transfer station delivers the simultaneously injection-molded preforms to the blow molding station.

The blow molding station receives the preforms from the transfer station and carries them by carriers which are moved circularly. After the preforms have been heated at a heating section, preforms less than the number of the simultaneously injection-molded preforms are then moved into a blow molding section whereat they are blow-molded into containers. These molded containers will be taken out of the blow molding section at its container removing section.

In such a manner, preforms can be molded for a reduced injection molding cycle time while securing time sufficient to cool the preforms. In addition, the working efficiency can be improved relating to the blow cavity molds. US 4.280.805 discloses an injection strech blow-moulding apparatus according to the preamble of claim 1.

The present invention is directed to further improve the aforementioned apparatus so that it is particularly adapted for the molding of containers each having a handle at its neck.

### Summary of the Invention

An object of the present invention is to provide an injection stretch blow molding apparatus which is suitable for use in molding containers each having handle near a neck.

The object is solved by an apparatus according to claim 1.

According to the present invention, there is provided an injection stretch blow molding apparatus, comprising:
an injection molding station for simultaneously injection-molding preforms each having a neck, a barrel, and a handle which is formed adjacent to the boundary between the neck and the barrel; and
a blow molding station for stretch-blow-molding the preforms into containers;
wherein the injection molding station includes:
two injection core molds;
a rotary member which rotates around a rotating shaft, supporting the two injection core molds at positions opposite to each other with the rotating shaft in the center;
an injection molding section including one injection cavity mold which is clamped alternately with one of the two injection core molds for injection-molding the preforms; and
an ejecting section for ejecting injection-molded preforms from the other of the injection core molds which has moved out of the injection molding section by rotation of the rotary member;
wherein the injection cavity mold includes barrel cavities for molding the barrels of the preforms, and handle cavities communicated with the barrel cavities for molding the handles, when the handle cavities are located at the outside of the barrel cavities in the radial direction of the rotary member; and
wherein the width of an outside part of the injection cavity mold measured from the centerline of an array of the barrel cavities in the radial direction of the rotary member is larger than the width of an inside part of the injection cavity mold measured from the centerline.

The injection cavity mold is asymmetry because of the handle cavities. According to this aspect of the invention, the centerline of the barrel cavity array can be placed closer to the rotating shaft. Thus, the rotating radius of the preforms can be maintained smaller even if preforms with handles are to be injection-molded. This can reduce the dimensions of the system.

Two neck cavity molds may be supported by the rotary member: Each of the two neck cavity molds has a pair of split mold portions for molding the necks of the preforms, and each of the handle cavities in the injection cavity mold has an opening to face one of the neck cavity molds carried to a position of the injection molding section by the rotary member. Thus, the handles of the preforms are molded in the handle cavities closed by one of the neck cavity molds.

Each of the neck cavity molds includes recesses to face the openings of the handle cavities of the injection cavity mold. Thus, these recesses may also function as handle cavities.

The injection cavity mold may include a distributing section for distributing a cooling water around the barrel cavities, when the distributing section is located at the inside of the handle cavities in the radial direction of the rotary member.

Thus, the cooling water distributing section may be located within a space in which there is no handle cavity. This can also improve the balance of weight in the injection cavity mold.

The injection cavity mold may include first cooling channels disposed around the barrel cavities, each of the first cooling channels having an inlet at one end and an outlet at the other end.

The distributing section may have a second cooling channel having at least one supply channel for supplying a cooling water to the inlets of the first cooling channels and at least one drain channel for draining a cooling water from the outlets of the first cooling channels.

The inlets may be arranged along the at least one supply channel at regular intervals, and the outlets may be arranged along the at least one drain channel at the same intervals as the inlets.

One of the inlets which is located at the most upstream position of the at least one supply channel is communicated with one of the outlets which is located at the most upstream position of the at least one drain channel.

Thus, the cooling water passing through the respective cooling channels can be moved through passageways of the same length extending from the entry of the supply channels to the exit of the drain channels. Therefore, the flow of water passing through the cooling channels can be substantially equalized. As a result, substantially the same cooling efficiency can be provided both at the opposite ends of the injection cavity mold and at the center thereof.

### Brief Description of the Drawings

Fig. 1 is a plan view of one embodiment of a stretch blow molding apparatus constructed in accordance with the present invention.

Fig. 2 is a plan view showing a layout of injection molds in the injection molding station of Fig. 1.

Fig. 3 is a plan view of an injection cavity mold shown in Fig. 2.

Fig. 4 is a front view of the distributing section of Fig.. 3.

Fig. 5 is a sectional view of the injection molding station.

Fig. 6 is a plan view of the delivering section and blow molding station shown in Fig. 1.

Fig. 7 is a sectional view of the heating device shown in Fig. 6.

Fig. 8 is an enlarged sectional view of the carrier and the preform shown in Fig. 7.

Fig. 9 is a sectional view showing the blow cavity mold in Fig. 6.

Fig. 10 is a fragmentary sectional view, in an enlarged scale, of Fig. 9.

Fig. 11 is a sectional view taken along a line XI-XI of Fig. 10.

### Description of the Preferred Embodiment

A preferred embodiment of the present invention will now be described in detail with reference to the drawings.

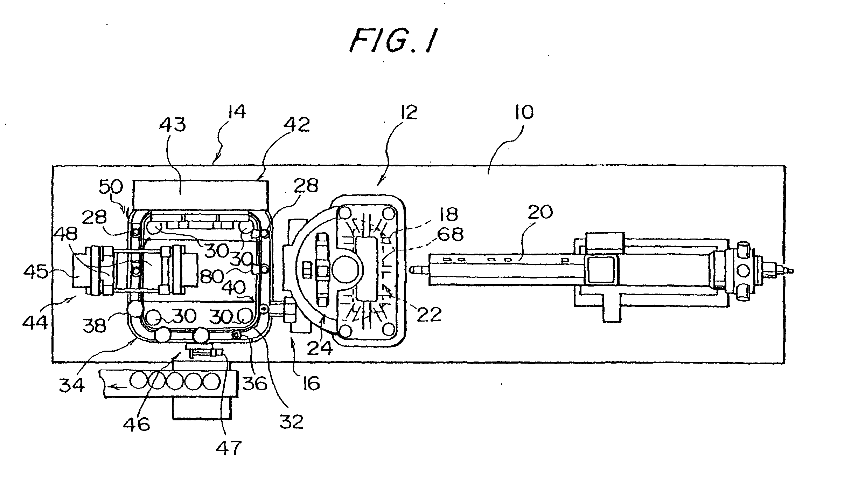

Figs. 1 to 11 show an injection stretch blow molding apparatus constructed in accordance with one embodiment of the present invention.

Fig. 1 is a plan view of an injection stretch blow molding apparatus.

The injection stretch blow molding apparatus comprises a machine base 10 on which there are generally formed an injection molding station 12, a blow molding station 14 and a delivering section 16 between the injection molding station 12 and the blow molding station 14.

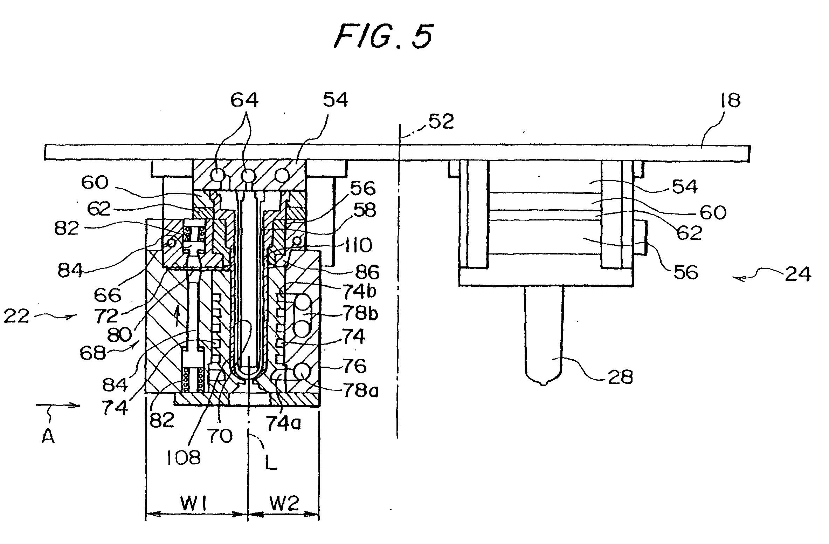

The injection molding station 12 comprises two injection core molds (not shown in Fig. 1) which are located 180 degrees apart and a rotary disc 18 for intermittently circulating the injection core molds along a rotary carrying path. The injection molding station 12 also comprises an injection molding section 22 located opposite to an injection device 20, and a removing section 24 opposed to the injection molding section 22. Each of the injection core molds is stopped at the injection molding section 22 or the removing section 24. As shown in Fig. 5, the injection molding section 22 has an injection cavity mold 68 capable of being clamped relative to each of the injection core molds 58 to injection-mold a plurality (e.g., four) of preforms 28 at the same time, each of the preforms having a neck 110, a barrel 108 and a handle 80 formed at the boundary therebetween.

The removing section 24 can release and remove the preforms 28 out of one of the injection core molds 58.

As shown in Fig. 5, the necks 110 of the preforms 28 are molded by the use of neck cavity molds 56 each of which is formed by a pair of split mold portions. The preforms 28 will be carried toward the removing section 24 by the rotary disc 18 while being held by the neck cavity molds 56 and injection core molds 58.

At the removing section 24, the neck cavity mold 56 may be downwardly moved to partially release the injection core mold 58 before the neck cavity mold 56 is opened to remove the preforms therefrom.

As shown in Fig. 1, the blow molding station 14 comprises a circulatingly carrying means 34 which is formed by four sprockets 30, a carrying chain 32 passed around these four sprockets 30 and a sprocket drive means (not shown), for example, such as an electric motor for rotatably driving one of the sprockets or a rack-and-pinion mechanism including a rack connected to a hydraulic cylinder and a pinion connected to the sprocket.

The carrying chain 32 includes a plurality (e.g., twelve) of carriers 36 fixedly connected thereto and equally spaced. Each of the carriers 36 supports a preform 28 or a container 38. Along a carrying path for the carriers 36, there are provided a receiving section 40 for receiving the preforms 28 from the delivering section 16, a heating section 42 for heating the preforms 28 received at the receiving section 40 to a temperature which is suitable for blow molding, a blow molding section 44 for stretch-blow-molding the preforms 28 heated at the heating section 42 into containers 38, and a container removing section 46 for removing the containers 38 molded at the blow molding section 44 out of the apparatus.

The heating section 42 includes a heating device 43 which may include a plurality of infrared heaters extending along the carrying path and disposed one above another. As the preforms are moved through the heating device 43, the preforms are heated by the heaters uniformly in a circumferential direction thereof while being rotated around their longitudinal axes by the respective carriers 36 which are rotatably driven by operative engagement of their preform rotation sprockets with the preform rotation chain.

The blow molding section 44 has a blow cavity mold 48 which may blow-mold a single preform 28, for example. The blow cavity mold 48 can be clamped against the preform 28 by means of a blow mold clamping mechanism 45.

The container removing section 46 includes a removing device 47 for inverting the container 38 into its upright state in which the container 38 will be removed out of the system.

The delivering section 16 delivers the preforms 28 from the removing section 24 of the injection molding station 12 to the receiving section 40 of the blow molding station 14.

The removing section 24 of the injection molding station 12 removes a plurality of preforms 28 simultaneously injection-molded at the injection molding section 22 out of the injection molding station 12. However, the delivering section 16 may deliver a plurality (e.g., four) of preforms 28 simultaneously removed at the removing section 24 to the receiving section 40 one at a time.

While the injection molding station 12 is designed to injection-molds preforms 28 in their upright state, the delivering section 16 inverts the preforms 28 which are in turn delivered to the blow molding station 14 in their inverted state.

In the blow molding station 14, further, the carrying means 34 intermittently moves the carriers 36. Between the heating section 42 and the blow molding section 44 is provided a stand-by section 50 whereat the heated preforms 28 are temporally stopped and waited.

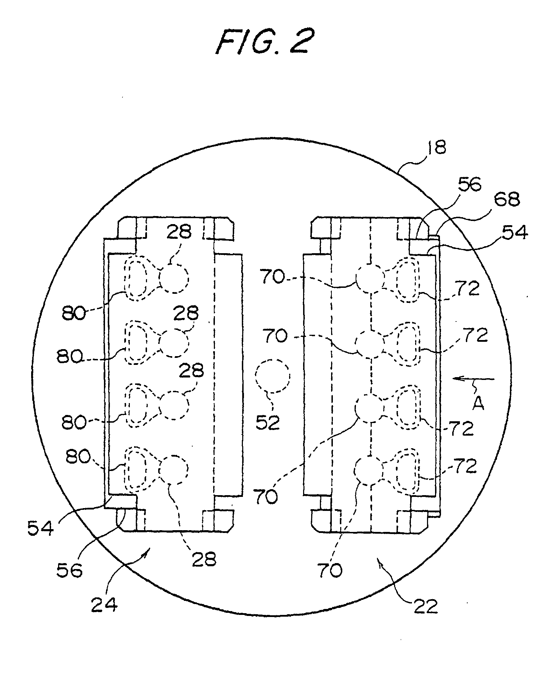

Figs. 2 to 5 show the injection molds in the injection molding station.

Fig. 2 is a plan view illustrating the layout of injection molds as viewed through the rotary disc 18.

Referring to Fig. 2, the rotary disc 18 is alternately rotated in opposite directions through 180 degrees around a rotating shaft 52.

An arrow A indicates a direction in which resin is injected in the injection device. The injection molding section 22 is provided on the side of the injection device around the rotating shaft 52 while the removing section 24 is provided on the opposite side to the injection molding section 22.

The rotary disc 18 includes two sets of injection core molds 58 and of neck cavity molds 56. Each set is mounted on the rotary disc 18 to be circulated and stopped at the injection molding section 22 or removing section 24 (see Fig. 5). Fig. 2 shows injection core mold holding plates 54 and neck cavity molds 56 on the rotary disc 18.

Referring now to Fig. 5, between each of the injection core mold holding plates 54 and each of the neck cavity molds 56 are mounted an injection core mold fixing plate 60 on which injection core mold 58 is mounted and an eject plate 62 for removing the preforms 28. The injection core mold holding plates 54 and neck cavity molds 56 are provided with cooling channels 64 and 66 to which cooling water is supplied through the rotating shaft 52 of Fig. 2 to cool the preforms 28.

As shown in Figs. 2 and 5, in the injection molding section 22, the injection cavity mold 68 is fixedly mounted for one set of injection core mold 58 and neck cavity mold 56.

The injection cavity mold 68 may include four barrel cavities 70 for defining the external shape of the barrels 108 in the preforms 28.

The top of the injection core mold 68 is formed with handle cavities 72 for molding handles 80, these handle cavities 72 being located corresponding to the respective barrel cavities 70. The handle cavities 72 are top-opened and may be closed by the neck cavity mold 56 when it is clamped relative to the injection cavity mold 68 (see Fig. 5). In addition, the neck cavity mold 56 may also be formed with recesses which are part of the handle cavities.

In Fig. 5, line L is the centerline of an array of the barrel cavities 70. W1 is the width of an outside part of the injection cavity mold 68 including the handle cavities 72, measured from the centerline L in the radial direction of the rotary disc 18. Similarly, W2 is the width of an inside part of the injection cavity mold 68. W2 is smaller than W1 because the inside part does not include the handle cavities 72. In this case, it is impossible to locate the handle cavities 72 inside of the centerline L because the parts around the rotating shaft 52 would interfere with an extending part of the injection cavity mold 68 including the handle cavities 72. If it is wanted to locate the handle cavities 72 inside, the centerline L must be shifted outward. This would increase the distance between the preforms and the rotating shaft 52, leading to increase in the size of the apparatus.

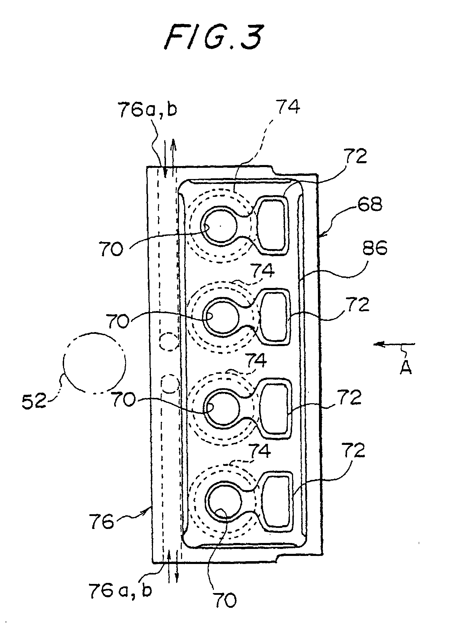

Referring to Figs. 3 and 5, each of the injection cavity molds 68 includes a cooling channel 74 formed therein around a corresponding barrel cavity 70. As shown in Fig. 5, the cooling channel 74 has water inlet and outlet 74a, 74b opened on a side wall of the injection cavity mold 68, respectively at a lower position and an upper position of the side wall. This side wall is closer to the rotating shaft 52 than the barrel cavity 70 is to the rotating shaft 52.

The side wall of the injection cavity mold 68 to which the water inlet and outlet 74a, 74b are opened includes a distributing section 76 for distributing the cooling water to the cooling channels 74 in the respective barrel cavities 70, as shown in Figs. 3 to 5. In the illustrated embodiment, the distributing section 76 is formed in the mold although it may be formed by a sheet metal.

When the distributing section 76 is located at the inside part of the injection cavity mold 68 to be opposite to the handle cavities 72, the balance of weight can be taken in the injection cavity mold 68 on the opposite sides of the centerline L.

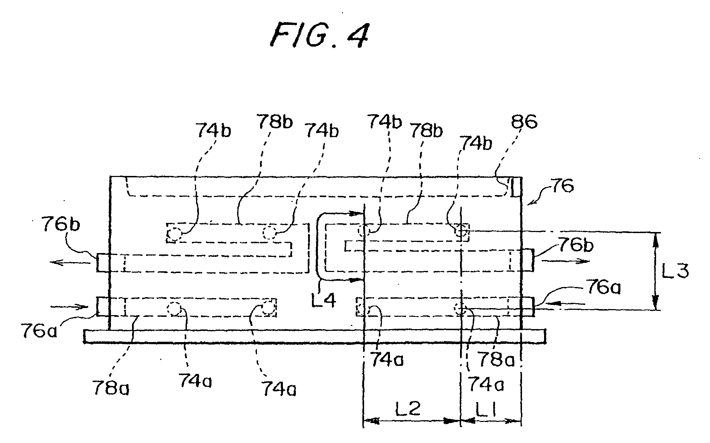

As shown in Fig. 4, cooling water inlet and outlet 76a, 76b are formed on each side of the distributing section 76. A set of inlet and outlet 76a, 76b are connected to a cooling line for cooling a set of two barrel cavities 70. Provision of two sets of such cooling lines enables the length of each cooling line to be reduced with increase of the cooling efficiency.

As shown in Fig. 4, each of the inlets 76a is formed at a position close to the bottom portion of the preforms 28 housed in the barrel cavities. Each inlet 76a is connected to a supply channel 78a to which the two inlets 74a are opened.

On the other hand, each of the outlets 76b formed above one of the water inlet 76a is connected to a drain channel 78b to which the two outlets 74b are opened. Each of the drain channels 78b extends once to the center of the distributing section 76, turns downwardly at a position near the center of the distributing section 76, and then communicates with the outlets 76b.

As shown in Fig. 4, within one set of the cooling line, it is now assumed that the distance between the outlet 76a and the closest inlet 74a is L1; the distance between two water inlets 74a and the distance between two water outlets 74b are respectively L2; the length of the cooling channel between the mating inlet and outlet 74a, 74b is L3; and the distance between the upper and lower drain channels is L4.

In each of the supply channels 78a, it is assumed that the inlet 74a which is closer to the inlet 76a is located upstream while the other inlet 74a is located downstream. In each of the drain channels 78b, it is assumed that the water outlet 74b which is farther from the outlet 76b is located upstream, this outlet 74b communicating with the upstream water inlet 74a.

Thus, the length of cooling line in which the cooling water flows through the upstream water inlet and outlet 74a, 74b becomes L1+L3+L2+L4+L2+L1. Similarly, the length of cooling line in which the cooling water flows through the downstream water inlet and outlet 74a, 74b becomes L1+L2+L3+L4+L2+L1. Thus, these cooling lines are equal in length to each other. Therefore, the flow of cooling water around two barrel cavities 70 can be substantially equalized.

The injection molding process is performed by clamping one set of injection core mold 58 and neck cavity mold 56 on the rotary disc 18 and the injection cavity mold 68 to form mold cavities into which a plastic material is injected. Thus, cylindrical end-closed preforms 28 each having a neck 110 with a handle 80 are molded, as shown in Fig. 5.

Each of the neck cavity mold 56 and injection cavity mold 68 includes a push pin 84 having a spring 82. These springs 82 push the push pin 84 to separate the molded handle 80 from the neck cavity mold 56 and injection cavity mold 68.

The top of the injection cavity mold 68 is formed with a tapered portion 86 for receiving the neck cavity mold 56 to provide a positive engagement therebetween.

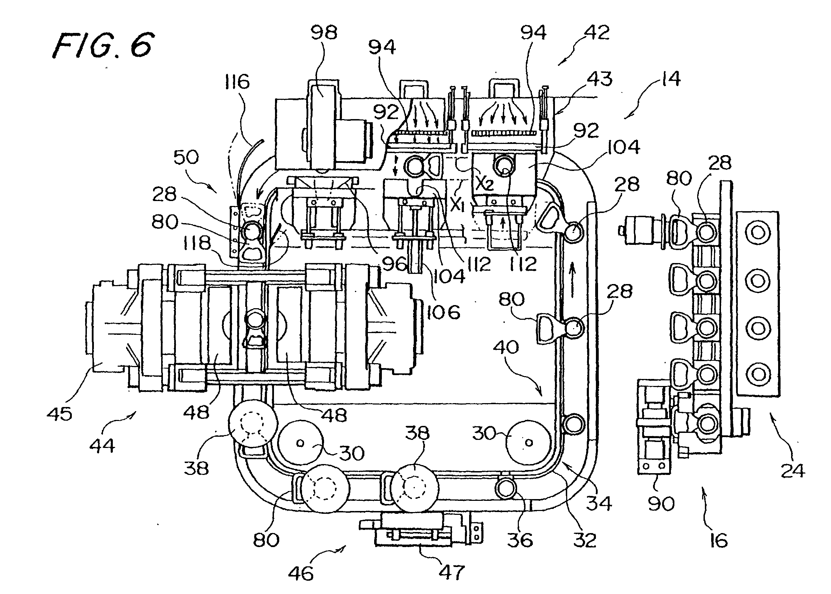

As shown in Fig. 6, the injection-molded preforms 28 are delivered to the delivering section 16 from the removing section 24. At this time, the upright preforms 28 are inverted by an inverting mechanism 90. After been inverted, the preforms 28 are then delivered to the respective carriers 36 in the receiving section 40 of the blow molding station 14. The carriers 36 are intermittently carried by the carrying chain 32 of the carrying means 34 while holding the preforms 28. The preforms 28 are heated by the heating device 43 in the heating section 42 before they are placed in the stand-by section 50. The preforms 28 are then blow molded into containers 38 in the blow molding section 44. The molded containers 38 are finally removed out of the system at the container removing section 46.

In the heating section 42, three of the preforms 28 are stopped in place. The heating device 43 has infrared heaters 92 disposed therein at three positions in which the three preforms 28 are stopped. The heaters extend in the preform carrying direction. Reflectors 94 and 96 are provided in the carrying path on each side.

The outer reflectors 94 are perforated through which air is blown from blowers 98 toward the preforms 28. Thus, the surfaces of the preforms 28 can be appropriately cooled without overheating.

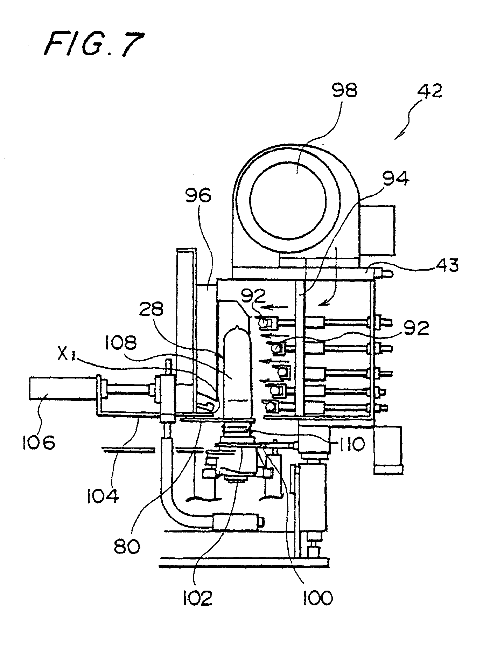

As the carriers 36 are moved through the heating device 43, each of the carriers 36 is rotated around its longitudinal axis by a carrying chain 100 provided at the carrying path through the preform rotation sprocket 102 mounted on the carrier 36, as shown in Fig. 7. Thus, a preform 28 held by each of the carriers 36 is rotated around its axis so that it will be heated uniformly in a circumferential direction.

As will be apparent from Fig. 7, each of the infrared heater sets includes a plurality of infrared heaters 92 arranged one above another in a direction of the height of the preform and movable horizontally relative to the preform to provide a desired temperature distribution in a direction of the height of the preform 28.

At each of the positions in which the preforms 28 are stopped within the heating section 42, a thermal insulation shutter 104 is located in the carrying path at the inner side. Such a thermal insulation shutter 104 can be moved toward or away from the corresponding preform 28 by a movement means such as a shutter cylinder 106.

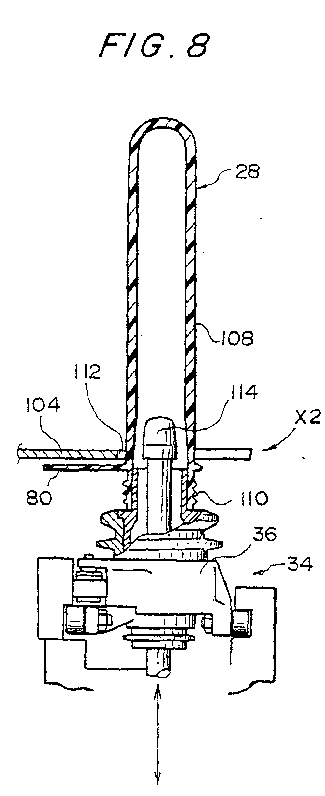

As shown in Fig. 8, each of the thermal insulation shutters 104 is located at a position close to the boundary between a portion to be heated (e.g., barrel 108) and a portion not to be heated (e.g., neck 110, handle 80) of the preform 28. When the preforms 28 are to be moved, each of the shutter cylinders 106 is actuated to retreat the thermal insulation shutter 104 to a position X1 (see Fig. 7) in which the shutter 104 does not interfere with movement of the preform 28. When the preform 28 has been stopped, the shutter cylinder 106 is again actuated to move or advance the thermal insulation shutter 104 to a position X2 in which the shutter 104 is placed nearest to one of the preforms 28, as shown in Fig. 8. Each of the thermal insulation shutters 104 has an opening 112 having its width larger than the diameter of the corresponding portion of the preform 28. Thus, the thermal insulation shutter 104 can substantially completely cover the handle 80 and neck 110 of a preform 28 (see Fig. 8). Therefore, the thermal insulation shutter 104 can reliably prevent the handle 80 and neck, 110 of the preform 28 from being heated. Furthermore, the thermal insulation shutter 104 can reflect the infrared rays to effectively the shoulder of the preform which is most hardly stretched and desired to receive more heat. In addition, the preform portion located below the thermal insulation shutter 104, that is, the portion not to be heated in the preform can be effectively protected from heat by introducing a cooling air from the corresponding blower 98 through the openings in the reflector 94 or exclusive air blowing ports provided below the reflector 94. In such a case, however, the thermal insulation shutters 104 are not necessarily required.

There is further provided a heating rod 114 which can be inserted into the interior of each of the preforms 28 through the corresponding carrier 36 to heat the preform 28 from inside at each of the positions in which the preform 28 is stopped within the heating section 42 (see Fig. 8).

Each of such heating rods 114 is movable between a position higher than the thermal insulation shutter 104 and a position in which the heating rod 114 will not interfere with movement of the preforms 28, through an elevator means (not shown).

Thus, each of the heating rods 114 can further heat the inside of the preform portion corresponding to the shoulder of a container to be molded. This can further improve the blow molding process.

The stand-by section 50 includes two elastically-deformable guide plates 116 and 118 located along the carrying path, in order to restrict the direction of the handle 80 in each preform (see Fig. 6). When the handle 80 of the preform 28 is touched by the guide plate 116 or 118, the handle 80 turns forward or backward in the preform carrying direction,

Even though the handle 80 of the preform 28 is directed in any direction after the preform 28 has been rotated around its axis within the heating section, the handle 80 can be properly turned forward or backward in the preform carrying. direction by the guide plates 116 and 118.

Such a guide means may take any suitable form which will not apply an increased load to the handle. Alternatively, the direction of the handle 80 may be predicted on the basis of the weight of the handle itself and the rotational inertia to guide the handle by inelastic guide plates.

The other means for arranging the handles 80 in a desired direction may be considered. More particularly, the carriers 36 are again rotated around their axes to arrange the handles 80 in a desired direction after the carriers 36 have been stopped at the stand-by section 50. The handle 80 in each of the re-rotated preforms 28 is then sensed by any suitable non-contact sensor means such as an optical sensor. As such an optical sensor senses the handle 80 properly turned in a predetermined direction, the rotation of the corresponding carrier 36 is stopped. Thus, the handles 80 in all the preforms 28 can be turned to a direction parallel to the predetermined direction such as the preform carrying direction.

If a non-contact sensor or an optical sensor is located immediately before the blow molding station and when it senses the handle 80 which is not turned in a direction parallel to the preform carrying direction, any suitable control means may be provided to stop the blow mold clamping operation.

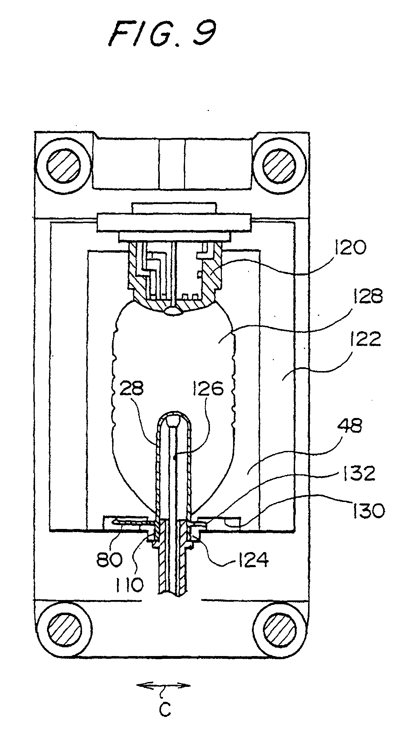

As shown in Figs. 9 to 11, the blow molding section 44 clamps the blow cavity mold 48 consisting of split mold portions, a bottom mold 120 and a mold clamping plate 122. The blow cavity mold 48 includes a neck holder 124 for holding the neck portion of the preform 28 during the blow molding process. The blow molding process is performed by blowing a pressurized air into the preform 28 and also lifting a stretching rod 126. Thus, a container 38 will be stretch-blow molded matching the shapes of the blow cavity 128 in the blow cavity mold 48 and the bottom mold 120.

The underside of the blow cavity mold 48 includes two recesses 130 formed thereon on the opposite sides of the neck holder 124, each of which recesses receives the handle 80 extending in a direction C (or preform carrying direction) perpendicular to the direction B in which the blow cavity mold 48 is to be clamped. Either of the two recesses 130 can reliably receive one handle 80 after it has been turned in a direction parallel to the preform carrying direction through the guide plates 116 and 118. Thus, the blow cavity mold 48 can be prevented from catching the handle 80 independently of the shape or deformed shape thereof.

In addition, the neck holder 124 includes a recess 132 for the handle 80.

Thus, these recesses 130 and 132 define a cavity slightly larger than the shape of the handle 80.

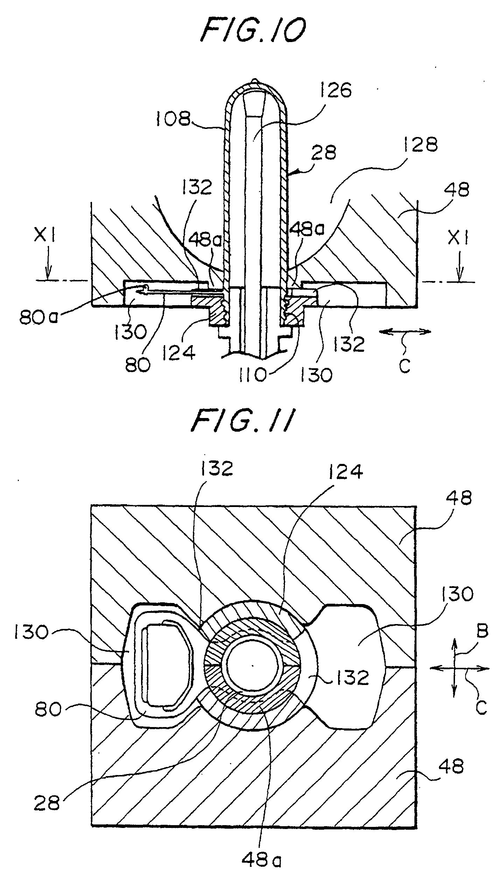

As shown in Figs. 10 and 11, the blow cavity mold 48 further includes a ring-shaped step 48a formed therein to extend outwardly from the bottom of the recesses 130 at a position surrounding the boundary region between the neck and barrel of a preform 28 housed within the blow cavity. This ring-shaped step 48a can prevent the boundary region between the neck 110 and barrel 108 of the preform 28 from being deformed by the blow pressure.

Even though the forwardmost end of the handle 80 has a thickened part 80a as shown in Fig. 10, the thickened part 80a will not interfere with the ring-shaped step 48a when the blow cavity mold 48 is clamped or opened.

The present invention is not limited to the aforementioned form, but may be carried out in any of various different forms within the scope of the invention.

The embodiment of the present invention has been described as to the stretch blow molding apparatus including an integral unit which is formed of the injection and blow molding stations. However, the injection molding station may be in the form of a single and separate one while the blow molding station may be in the form of a single and separate one.

The embodiment of the present invention has been described as to the injection molding station for simultaneously injection-molding four preforms as well as the blow molding station for blow-molding the preforms one at a time. However, the number of preforms or containers to be molded may be suitably selected if necessary.

The embodiment of the present invention has been described as to the handle cavities included in the injection cavity molds. However, the handle cavities may be formed in the neck cavity mold or in both the injection and neck cavity molds.

The shape of the handles may be L-shaped.

## Claims

1. An injection stretch blow-molding apparatus, comprising:
an injection molding station (12), which includes two injection core moulds (58) for simultaneously injection-molding preforms (28) each having a neck (110), a barrel (108), and a handle (80) which is formed adjacent to the boundary between said neck and said barrel; and
a blow molding station (14) for stretch-blow-molding the preforms (28) into containers;
**characterized in that**
said injection molding station (12) includes:
- a rotary member (18) which rotates around a rotating shaft, supporting said two injection core molds (58) at positions opposite to each other with said rotating shaft in the center;
- an injection molding section (22) including one injection cavity mold (68) which is clamped alternately with one of said two injection core molds (58) for injection-molding the preforms; and
- an ejecting section (24) for ejecting injection-molded preforms from the other of said injection core molds (58) which has moved out of said injection molding section by rotation of said rotary member;
- wherein said injection cavity mold (68) includes barrel cavities (70) for molding said barrels of the preforms, and handle cavities (72) communicated with said barrel cavities (70) for molding said handles, when said handle cavities are located at the outside of said barrel cavities in the radial direction of said rotary member; and
- wherein the width of an outside part of said injection cavity mold (68) measured from the centerline of an array of said barrel cavities (70) in the radial direction of said rotary member (18) is larger than the width of an inside part of said injection cavity mold measured from the centerline.

2. The injection stretch blow molding apparatus as defined in claim 1,
**characterized in that**
two neck cavity molds (56) are supported by said rotary member (18);
each of said two neck cavity molds has a pair of split mold portions for molding said necks of the preforms;
each of said handle cavities (72) in said injection cavity mold (68) has an opening to face one of said neck cavity (58) molds carried to a position of said injection molding section (22) by said rotary member (18); and
said handles (80) of the preforms are molded in said handle cavities (72) closed by one of said neck cavity molds (56).

3. The injection stretch blow molding apparatus as definded in claim 2,
**characterized in that**
each of said neck cavity molds (56) includes recesses to face said openings of said handle cavities (72) of said injection cavity mold (68).

4. The injection stretch blow molding apparatus as defined in one of claim 1 to 3,
**characterized in that**
said injection cavity mold (68) includes a distributing section (76) for distributing a cooling water around said barrel cavities (70), when said distributing section is located at the inside of said handle cavities (72) in the radial direction of said rotary member (18).

5. The injection stretch blow molding apparatus as defined in claim 4,
**characterized in that**
said injection cavity mold (68) includes first cooling channels (74) disposed around said barrel cavities, each of said first cooling channels having an inlet (74a) at one end and an outlet (74b) at the other end;
said distributing secting section (76) has a second cooling channel having at least one supply channel (78a) for supplying a cooling water to said inlets of said first cooling channels and at least one drain channel (78b) for draining a cooling water from said outlets of said first cooling channels (74);
said inlets are arranged along said at least one supply channel (78a) at regular intervals;
said outlets are arranged along said at least one drain channel (78b) at the same intervals as said inlets; and one of said inlets which is located at the most upstream position of said at least one supply channel is communicated with one of said outlets which is located at the most upstream position of said at least one drain channel (78b).

## Patentansprüche

1. Vorrichtung zum Spritzstreckblasformen mit:
einer zwei Spritzkernformen (58) umfassenden Spritzgießstation (12) zum gleichzeitigen Spritzgießen von Vorformlingen (28), von denen jeder einen Hals (110), einen Korpus (108) und einen nahe der Grenzlinie zwischen dem Hals und dem Korpus ausgeformten Griff (80) aufweist; und
einer Blasformstation (14) zum Streckblasformen der Vorformlinge (28) zu Behältern,
**dadurch gekennzeichnet,**
**dass** die Spritzgießstation (12) umfasst:
- ein um eine Rotationswelle drehendes Drehteil (18) zum Halten der Spritzkernformen (58) in mit der Rotationswelle im Zentrum einander gegenüber angeordneten Positionen;
- einen Spritzgießabschnitt (22) mit einer Spritzhohlform (68), welche wechselweise mit einer der beiden Spritzkernformen (58) zum Spritzgießen der Vorformlinge geklemmt ist; und
- einen Ausstossabschnitt (24) zum Ausstossen der spritzgegossenen Vorformlinge aus der anderen der Spritzkernformen (58), welche durch Drehung des Drehteils aus dem Spritzgießabschnitt herausbewegt worden ist;
- wobei die Spritzhohlform (68) Korpushohlräume (70) zum Gießen der Korpusse der Vorformlinge und Griffhohlräume (72), welche mit den Korpushohlräumen (70) in Verbindung stehen, zum Gießen der Griffe aufweist, wenn die Griffhohlräume in radialer Richtung des Drehteils gesehen an der Außenseite der Korpushohlräume angeordnet sind; und
- wobei die Weite eines Außenteils der Spritzhohlform (68) gemessen von der Mittellinie einer Anordnung der Korpushohlräume (70) in radialer Richtung des Drehteils (18) größer ist als die Weite des Innenteils der Spritzhohlform gemessen von der Mittellinie.

2. Vorrichtung zum Spritzstreckblasformen nach Anspruch 1,
**dadurch gekennzeichnet,**
**dass** zwei Halshohlformen (56) durch das Drehteil (18) gehalten sind;
**dass** jede der zwei Halshohlformen ein Paar geteilte Formabschnitte zum Formen der Hälse der Vorformlinge aufweist;
**dass** jede der Griffhohlräume (72) in der Spritzhohlform (68) eine Öffnung hat, welche einer der Halshohlformen (58) zugewandt ist, wenn diese durch das Drehteil (18) in eine Position des Spritzformabschnittes (22) durch das Drehteil (18) transportiert ist; und
**dass** die Griffe (80) der Vorformlinge in den Griffhohlräumen (72) gegossen werden, welche durch eine der Halshohlformen (56) geschlossen sind.

3. Vorrichtung zum Spritzstreckblasformen nach Anspruch 2
**dadurch gekennzeichnet,**
**dass** jede der Halshohlformen (56) eine Ausnehmung aufweist, um diese den Öffnungen der Griffhohlräume (72) der Spritzhohlform (68) zuzuwenden.

4. Vorrichtung zum Spritzstreckblasformen nach einem der Ansprüche 1 bis 3,
**dadurch gekennzeichnet,**
**dass** die Spritzhohlform (68) einen Verteilerabschnitt (76) zum Verteilen von Kühlwasser um die Korpushohlräume (70) aufweist, wenn der Verteilerabschnitt an der Innenseite der Griffhohlräume (72) in radialer Richtung des Drehteils (18) gesehen angeordnet ist.

5. Vorrichtung zum Spritzstreckblasformen nach Anspruch 4,
**dadurch gekennzeichnet,**
**dass** die Spritzhohlform (68) erste Kühlkanäle (74) aufweist, welche um die Korpushohlräume herum angeordnet sind, wobei jeder der ersten Kühlkanäle einen Einlass (74a) am einen Ende und einen Auslass (74b) am anderen Ende hat;
**dass** der Verteilerabschnitt (76) einen zweiten Kühlkanal hat, welcher mindestens einen Versorgungskanal (78a) zum Versorgen der Einlässe der ersten Kühlkanäle mit Kühlwasser und mindestens einen Ablasskanal (78b) zum Ablassen von Kühlwasser aus den Auslässen der ersten Kühlkanäle (74) aufweist;
**dass** die Einlässe entlang des mindestens einen Versorgungskanals (78a) in gleichmäßigem Abstand angeordnet sind;
**dass** die Auslässe entlang des mindestens einen Ablasskanals (78b) mit demselben Abstand wie die Einlässe angeordnet sind; und
**dass** einer der Einlässe, welcher an der stromaufwärtigsten Position an dem mindestens einen Versorgungskanal angeordnet ist, mit einem der Auslässe in Verbindung steht, welcher an der stromaufwärtigsten Position des mindestens einen Ablasskanals (78b) angeordnet ist.

## Revendications

1. Dispositif de moulage par injection-étirage-soufflage, comprenant :
un poste (12) de moulage par injection qui comprend deux moules (58) d'injection à noyau pour le moulage par injection simultanée de préformes (28) ayant chacune un goulot (110), un corps cylindrique (108), et une poignée (80) qui est formée adjacente à la limite entre ledit goulot et ledit corps cylindrique; et
un poste (14) de moulage par soufflage pour le moulage par soufflage avec étirage des préformes (28) en récipients ;
***caractérisé en ce que***
ledit poste (12) de moulage par injection comprend :
- un élément rotatif (18) qui tourne autour d'un arbre rotatif, supportant lesdits deux moules (58) d'injection à noyau dans des positions opposées l'une à l'autre avec ledit arbre rotatif au centre;
- une section (22) de moulage par injection comprenant un moule (68) d'injection à cavité qui est immobilisé par serrage alternativement avec l'un desdits deux moules (58) d'injection à noyau pour le moulage des préformes par injection ; et
- une section d'éjection (24) pour éjecter les préformes moulées par injection de l'autre desdits moules (58) d'injection à noyau qui a quitté ladite section de moulage par injection par rotation dudit élément rotatif;
- dans lequel ledit moule (68) d'injection à cavité comprend des cavités (70) pour corps cylindriques pour mouler lesdits corps cylindriques des préformes, et des cavités (72) pour poignées mises en communication avec lesdites cavités (70) pour mouler lesdites poignées, lorsque lesdites cavités pour poignées sont situées à l'extérieur desdites cavités pour corps cylindriques dans la direction radiale dudit élément rotatif ; et
- dans lequel la largeur d'une partie extérieure dudit moule (68) d'injection à cavité, mesurée à partir de la ligne médiane d'un ensemble desdites cavités (70) pour corps cylindriques dans la direction radiale dudit élément rotatif (18), est supérieure à la largeur d'une partie intérieure dudit moule d'injection à cavité mesurée à partir de la ligne médiane.

2. Dispositif de moulage par injection-étirage-soufflage selon la Revendication 1,
***caractérisé en ce que***
deux moules (56) à cavités pour goulots sont portés par ledit élément rotatif (18),
chacun desdits moules à cavités pour goulots a deux parties en demi-moules pour mouler lesdits goulots des préformes ;
chacune desdites cavités (72) pour poignées dans ledit moule (68) d'injection à cavités a une ouverture prévue pour donner sur l'un desdits moules (56) à cavités pour goulots amenés à une position de ladite section (22) de moulage par injection par ledit élément rotatif (18) ; et
lesdites poignées (80) des préformes sont moulées dans lesdites cavités (72) pour poignées fermées par l'un desdits moules (56) à cavités pour goulots.

3. Dispositif de moulage par injection-étirage-soufflage selon la Revendication 2,
***caractérisé en ce que***
chacun desdits moules (56) à cavités pour goulots comporte des évidements prévus pour donner sur lesdites ouvertures desdites cavités (72) pour poignées dudit moule (68) d'injection à cavités.

4. Dispositif de moulage par injection-étirage-soufflage selon l'une des Revendications 1 à 3,
***caractérisé en ce que***
ledit moule (68) d'injection à cavités comprend une section distributrice (76) destinée à distribuer de l'eau de refroidissement autour desdites cavités (70) pour corps cylindriques, lorsque ladite section distributrice est située à l'intérieur desdites cavités (72) pour poignées dans la direction radiale dudit élément rotatif (18).

5. Dispositif de moulage par injection-étirage-soufflage selon la Revendication 4,
***caractérisé en ce que***
ledit moule (68) d'injection à cavités comporte des premiers canaux (74) de refroidissement disposés autour desdites cavités pour corps cylindriques, chacun desdits premiers canaux de refroidissement ayant une entrée (74a) à une extrémité, et une sortie (74b) à l'autre extrémité ;
ladite section distributrice (76) a un second canal de refroidissement ayant au moins un canal d'alimentation (78a) destiné à fournir de l'eau de refroidissement auxdites entrées desdits premiers canaux de refroidissement et au moins un canal de drainage (78b) pour drainer l'eau de refroidissement desdites sorties desdits premiers canaux (74) de refroidissement ;
lesdites entrées sont disposées le long dudit au moins un canal d'alimentation (78a) à intervalles réguliers ;
lesdites sorties sont disposées le long dudit au moins un canal de drainage (78b) aux mêmes intervalles que lesdites entrées ;
et l'une desdites entrées qui est située dans la position la plus en amont dudit au moins un canal d'alimentation est mise en communication avec l'une desdites sorties qui est située dans la position la plus en amont dudit au moins un canal de drainage (78b).
